# EUROPEAN PATENT APPLICATION

(11) **EP 4 737 144 A2**
(43) Date of publication of application: **06.05.2026**
(21) Application number: 25206990.1
(22) Date of filing: 06.10.2025
(51) Int. Cl.: B60H 1/00, B60H 1/14, B60H 1/32

(54) **THERMAL MANAGEMENT SYSTEM FOR BATTERY ELECTRIC VEHICLES**

(30) Priority: 09.10.2024 US 202418910089
(71) Applicant: International Truck Intellectual Property Company, LLC, Lisle, IL 60532 (US)
(72) Inventor: WU, Shouhao, South Barrington, IL, 60010 (US); OPPERMANN, Dean Alan, Minooka, IL, 60447 (US)
(74) Representative: Kuhnen & Wacker Patent- und Rechtsanwaltsbüro PartG mbB

(57) **Abstract**

A thermal management system (100) for a battery electric vehicle comprises an air conditioner (AC) system for providing cooling to a cabin of the battery electric vehicle. The thermal management system also includes a chiller (101) for providing cooling to a battery (121) within the battery electric vehicle. The AC system provides heating to the cabin (123) by acting as an indirect heat pump.

## Description

### FIELD OF THE INVENTION

The present disclosure relates generally to a cooling and heating system for a vehicle, and more particularly to a thermal management system for battery electric vehicles.

### BACKGROUND

For internal combustion engine (ICE) powered vehicles, refrigeration is only needed for driver and passenger cabin air conditioning. Cabin heating is provided from the heat generated by the ICE. Engine cooling is typically provided through a radiator and an engine-driven fan.

Battery electric vehicles (BEVs) are growing in popularity. BEVs utilize batteries as the source of motive power for cars, trucks, and other vehicles. Early BEVs used fuel-fired heaters or resistive electric heaters for cabin heating. The former requires combustion of hydrocarbon fuel and generates CO2 and other harmful emissions. The latter uses electricity to directly heat the air or coolant, which is an inefficient process.

A need therefore exists for a thermal management system that provides an efficient way to manage the cooling and heating of a cabin, batteries, and electric components of BEVs.

### SUMMARY OF THE INVENTION

Provided herein is a thermal management system for battery electric vehicles. The thermal management system utilizes waste heat, a compressor, electric heaters, a compressor running as a heat pump, to provide heating to a cabin of a battery electric vehicle. The heating is preferably provided to a cabin of the BEV and provides heat to the driver and any passengers or occupants of the cabin. The thermal management system also provides heat to batteries in the BEV and a defroster in the BEV. An exemplary embodiment of the present invention can also provide cooling for drivers, passengers, and batteries in the BEV.

In exemplary embodiments of the present invention, the air conditioning (AC) system runs as an indirect heat pump, extracting heat from the waste heat from the power electronics, power motor and batteries, depending on the ambient and vehicle running conditions. This is an efficient way of heating the cabin and passengers.

### BRIEF DESCRIPTION OF THE DRAWINGS

The foregoing and other features of the present disclosure will become more fully apparent from the following description and appended claims, taken in conjunction with the accompanying drawings. These drawings depict only several embodiments in accordance with the disclosure and are, therefore, not to be considered limiting of its scope.
FIG. 1 is a schematic diagram of a thermal management system for a battery electric vehicle according to an exemplary embodiment of the invention.
FIG. 2 is a schematic diagram of a thermal management system for a battery electric vehicle using waste heat and a compressor as a heat source according to an exemplary embodiment of the invention.
FIG. 3 is a schematic diagram of a thermal management system for a battery electric vehicle using electric heaters, waste heat, and a compressor as a heat source according to an exemplary embodiment of the invention.
FIG. 4 is a schematic diagram of a thermal management system for a battery electric vehicle using waste heat and a compressor as heating for the cabin, batteries, and defogging according to an exemplary embodiment of the invention.
FIG. 5 is a schematic diagram of a thermal management system for a battery electric vehicle providing heating for the cabin and cooling for the batteries according to an exemplary embodiment of the invention.
FIG. 6 is a schematic diagram of a thermal management system for a battery electric vehicle using only waste heat for heating without running the compressor according to an exemplary embodiment of the invention.
FIG. 7 is a schematic diagram of a thermal management system for a battery electric vehicle providing cooling for a driver and batteries while the air conditioner is running according to an exemplary embodiment of the invention.
FIG. 8 is a schematic diagram of a thermal management system for a battery electric vehicle providing cooling for a driver and batteries using ambient air according to an exemplary embodiment of the invention.

In the following detailed description, various embodiments are described with reference to the appended drawings. The skilled person will understand that the accompanying drawings are schematic and simplified for clarity. Like reference numerals refer to like elements or components throughout. Like elements or components will therefore not necessarily be described in detail with respect to each figure.

### DETAILED DESCRIPTION

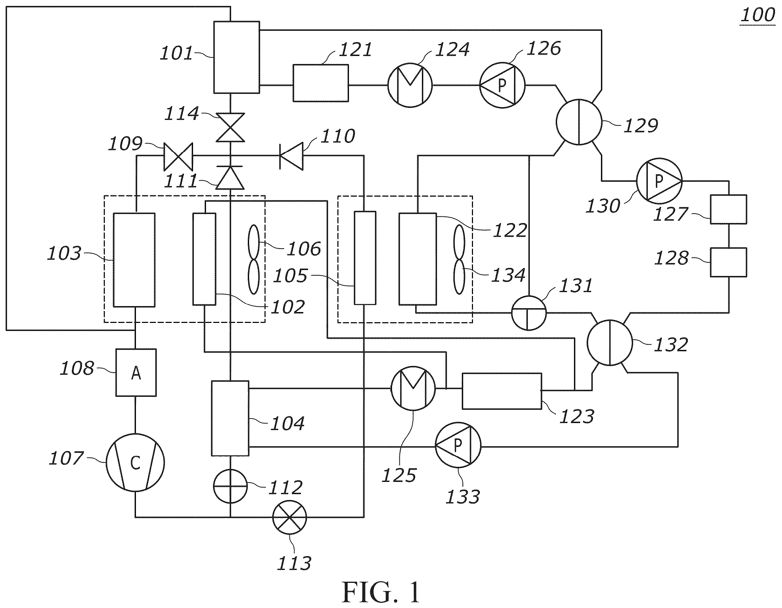

FIG. 1 is a schematic diagram of a thermal management system 100 for a battery electric vehicle according to an exemplary embodiment of the invention. Thermal management system 100 preferably comprises a chiller 101 and includes expansion valve 114 and check valve 111 therebetween. In-dash heater core 102 is coupled to in-dash blower 106, which blows air across in-dash heater core 102 during operation. Chiller 101 is also coupled to in-dash evaporator 103 with expansion valves 109 and 114 therebetween. Heater core 102 is connected to the coolant loop(s). Heater core 102 is in parallel to cabin heater 123, providing heat to the driver and cab, respectively. In-dash evaporator 103 and condenser 105 release heat from refrigerant to air. Liquid condenser 104 and chiller 101 exchange heat between refrigerant and coolant.

In-dash evaporator 103 is coupled to accumulator 108, which is coupled to refrigerant compressor 107. Electric heater 125 is coupled to cabin heater 123. It should be understood that there can be a plurality of cabin heaters, but only one, cabin heater 123, is depicted for clarity.

Thermal management system 100 also includes condenser 105 and radiator 122. Radiator fan 134 is coupled to radiator 122 and provides air flow to radiator 122 to assist in providing cooling of the fluid within radiator 122. Check valve 110 is disposed between condenser 105 and expansion valves 109 and 114.

The vehicle also includes power electronics 127 and motor 128. Power electronics 127 convert and distribute electrical power to other BEV systems, for example heating, ventilation, lighting, and infotainment systems. Power electronics 127 can include inverters, power converters, and chargers. Motor 128 provides propulsion to the BEV.

A plurality of valves provide for control of cooling and heating liquids within thermal management system 100. For example, two-way valve 112 provides for control of liquids between liquid condenser 104 and condenser 105, and also between liquid condenser 104 and refrigerant compressor 107. Two-way valve 113 provides for control of liquids between condenser 105 and liquid condenser 104 and refrigerant compressor 107.

Four-way coolant valve 132 provides control of liquids between radiator 122, motor 128, cabin heater 123, and coolant pump 133. Four-way coolant valve 129 provides control of liquids between radiator 122, coolant pump 126, chiller 101, and coolant pump 130. Three-way coolant valve 131 provides control of coolant to bypass the radiator 122 when needed.

Battery 121 provides power to the BEV. Battery 121 is depicted as a single battery, but it should be understood that battery 121 can comprise a plurality of batteries. In an exemplary embodiment, battery 121 is a lithium-ion battery, but it should be understood that any battery technology that provides sufficient power to the BEV could be utilized.

Coolant pump 126 is disposed between four-way coolant valve 129 and electric heater 124. Coolant pump 130 is disposed between four-way coolant valve 129 and power electronics 127. Coolant pumps 126 and 130 transfer coolant from radiator 122 to other parts of thermal management system 100 and back. By circulating coolant throughout thermal management system 100, coolant pumps 126, 130, and 133 maintain controlled temperatures throughout thermal management system 100 by dissipating heat generated within thermal management system 100.

This invention can utilize multiple refrigerants, such as R134a, or R1234yf. Each of these refrigerants has a distinct operating temperature and pressure ranges. With R134a or R1234yf, current conventional AC system components can be used.

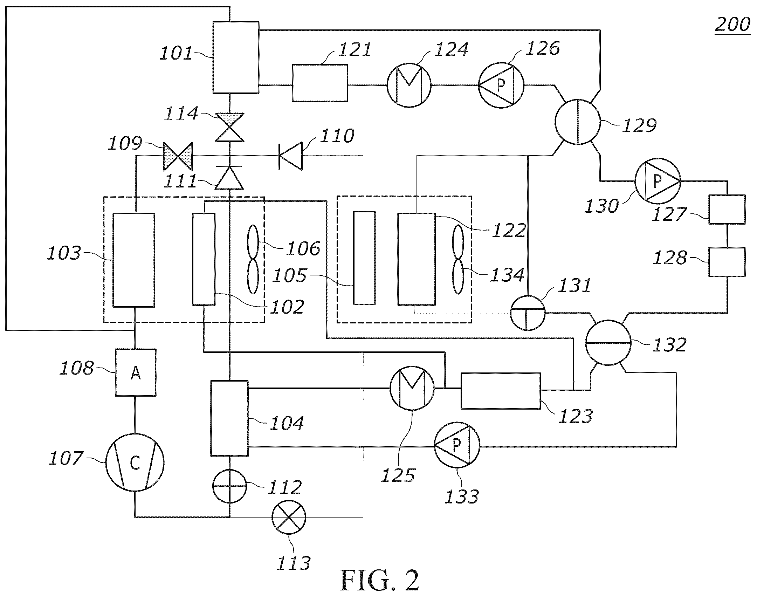

FIG. 2 is a schematic diagram of a thermal management system 200 for a battery electric vehicle using waste heat and a compressor as a heat source according to an exemplary embodiment of the invention. The exemplary embodiment depicted in FIG. 2 provides heating for a driver and cabin of a BEV, as well as the batteries used by the BEV. The cabin can include both the driver and passengers in the BEV. This exemplary embodiment is preferably used when the ambient outdoor temperature is between approximately -10 and 5 degrees Celsius.

In accordance with this exemplary embodiment, cabin heater 123 and in-dash heater core 102 obtain high temperature heat from liquid condenser 104. This heat is pumped through the indirect heat pump from waste heat, which is heat that is produced by elements within thermal management system 200. In current BEVs, such waste heat is not utilized and wasted.

In this indirect heat pump system, low pressure, low temperature refrigerant vapor is received into compressor 107. Compressor 107 compresses the received refrigerant vapor into high pressure high temperature vapor. The vapor condenses and releases heat in liquid condenser 104 to the coolant, which carries the heat to both cabin heater 123 and in-dash heater core 102. The liquid refrigerant expands through expansion valve 114 and becomes a low temperature, low pressure vapor/liquid mixture, which extracts heat from coolant in chiller 101 and becomes low temperature, low pressure vapor, which is circulated through accumulator 108, and the process continues.

To heat the cabin of the vehicle, valve 132 is closed and separates the cabin heating loop from other coolant loops. Pump 133 preferably circulates the coolant through liquid condenser 104, which carries the heat to cabin heater 123 for cabin heating and to in-dash heater core 102 for driver heating. In this exemplary embodiment, electric heater 125 is turned off.

To heat batteries 121, valve 129 is opened and the coolant carries waste heat from power electronics 127 and motor 128, bypassing radiator 122 through 3-way valve 131, then through pump 126 to heat batteries 121. In this exemplary embodiment, electric heater 124 is turned off. The coolant is then provided to chiller 101, which transfers heat to evaporate the refrigerant in the indirect heat pump system.

In this exemplary embodiment, the coolant from power electronics 127 and motor 128 is not hot enough to directly heat the cabin or the driver. Therefore, this exemplary embodiment utilizes an indirect heat pump system to raise the temperature of the waste heat from low temperature in chiller 101 to high temperature in liquid condenser 104 to do the heating. Most energy consumed in compressor 107 is also converted to heat for heating.

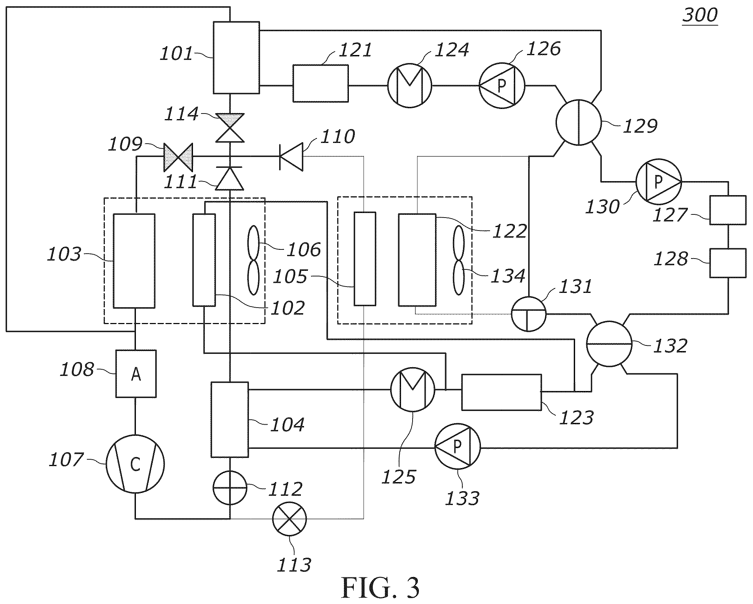

FIG. 3 is a schematic diagram of a thermal management system 300 for a battery electric vehicle using electric heaters, waste heat, and a compressor as a heat source according to an exemplary embodiment of the invention. The exemplary embodiment depicted in FIG. 3 provides heating for a cabin of a BEV, as well as the batteries used by the BEV. The cabin can include both the driver and passengers in the BEV. This exemplary embodiment is preferably used when the ambient outdoor temperature is below approximately -10 degrees Celsius.

In accordance with this exemplary embodiment, cabin heater 123 obtains heat from waste heat and from electric heaters. Waste heat is heat that is produced by elements within thermal management system 200.

In this indirect heat pump system, low pressure, low temperature refrigerant vapor is received into compressor 107. Compressor 107 compresses the received refrigerant vapor into high pressure high temperature vapor. The vapor condenses and releases heat in liquid condenser 104 to the coolant, which carries the heat to both cabin heater 123 and in-dash heater core 102. The liquid refrigerant expands through expansion valve 114 and becomes a low temperature, low pressure vapor/liquid mixture, which extracts heat from coolant in chiller 101 and becomes low temperature, low pressure vapor, which is circulated through accumulator 108, and the process continues.

To heat the cabin of the vehicle, valve 132 is closed and separates the cabin heating loop from other cooling loops. Pump 133 preferably circulates the coolant through liquid condenser 104, which carries the heat to cabin heater 123 for cabin heating and to in-dash heater core 102 for driver heating.

To heat batteries 121, valve 129 is opened and the coolant carries waste heat from power electronics 127 and motor 128, bypassing radiator 122 through three-way valve 131, then through pump 126 to heat batteries 121. The coolant is then provided to chiller 101, which transfers heat to evaporate the refrigerant in the indirect heat pump system.

In this exemplary embodiment, the coolant from power electronics 127 and motor 128 is not hot enough to directly heat the cabin or the driver. In very low ambient conditions, the waste heat generated from power electronic 127 and electric motor 128 is not sufficient to provide all the heat for heating. Electric heaters are turned on to supplement heat. Therefore, this exemplary embodiment utilizes a heat pump system and electric heaters to raise the temperature of the waste heat from low temperature to high temperature using a heat pump and electric heaters to do the heating.

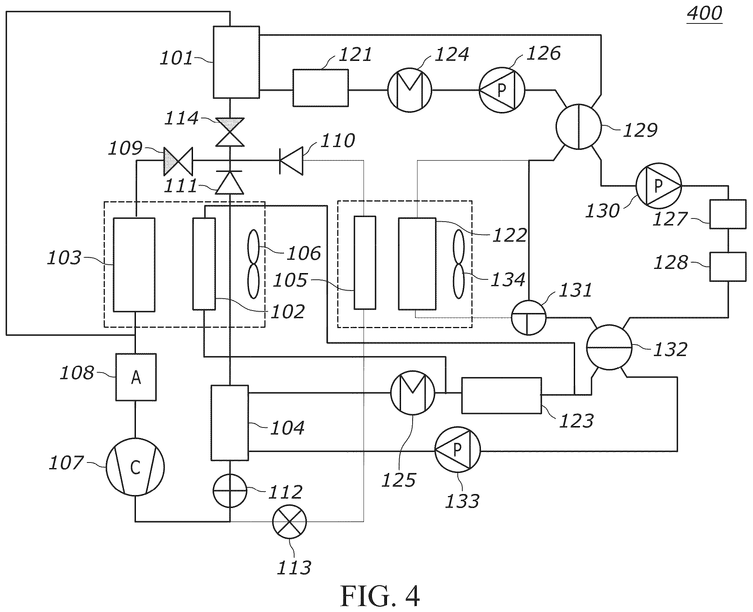

FIG. 4 is a schematic diagram of a thermal management system 400 for a battery electric vehicle using waste heat and a compressor as heating for the cabin, batteries, and defogging according to an exemplary embodiment of the invention. The exemplary embodiment depicted in FIG. 4 provides heating for a cabin of a BEV, as well as the batteries used by the BEV. This exemplary embodiment also provides chilling to dehumidify the air for defogging the windshield and adjacent window glass in the BEV. The cabin can include both the driver and passengers in the BEV. This exemplary embodiment preferably uses waste heat and a compressor as a heat source.

In accordance with this exemplary embodiment, cabin heater 123 obtains heat from waste heat, which is heat that is produced by elements within thermal management system 200.

In this indirect heat pump system, low pressure, low temperature refrigerant vapor is received into compressor 107. Compressor 107 compresses the received refrigerant vapor into high pressure high temperature vapor. The vapor condenses and releases heat in liquid condenser 104 to the coolant, which carries the heat to both cabin heater 123 and in-dash heater core 102. The liquid refrigerant expands through expansion valve 114 and becomes a low temperature, low pressure vapor/liquid mixture, which extracts heat from coolant in chiller 101 and becomes low temperature, low pressure vapor, which is circulated through accumulator 108, and the process continues.

To heat the cabin of the vehicle, valve 132 is closed and separates the cabin heating loop from other cooling loops. Pump 133 preferably circulates the coolant through liquid condenser 104, which carries the heat to cabin heater 123 for cabin heating and to in-dash heater core 102 for driver heating. In this exemplary embodiment, electric heater 125 is turned off.

To heat batteries 121, valve 129 is opened and the coolant carries waste heat from power electronics 127 and motor 128, bypassing radiator 122 through three-way valve 131, then through pump 126 to heat batteries 121. In this exemplary embodiment, electric heater 124 is turned off. The coolant is then provided to chiller 101, which transfers heat to evaporate the refrigerant in the indirect heat pump system.

This exemplary embodiment also provides defogging of the windows of the vehicle, for example the windshield. To defog the windows of the vehicle, expansion valve 109 is partially opened to allow refrigerant to pass into in-dash evaporator 103 and flow back to accumulator 108. In-dash evaporator 103 chills the incoming air and this chilled and dehumidified air is blown towards the windshield and windows of the vehicle to help defog the windshield and windows.

In this exemplary embodiment, the coolant from power electronics 127 and motor 128 is not hot enough to directly heat the cabin or the driver. Therefore, this exemplary embodiment utilizes a heat pump system to raise the temperature of the waste heat from low temperature to high temperature using a heat pump to do the heating. Further, this embodiment uses in-dash evaporator 103 to dehumidify air to be used to defog the windows of the vehicle.

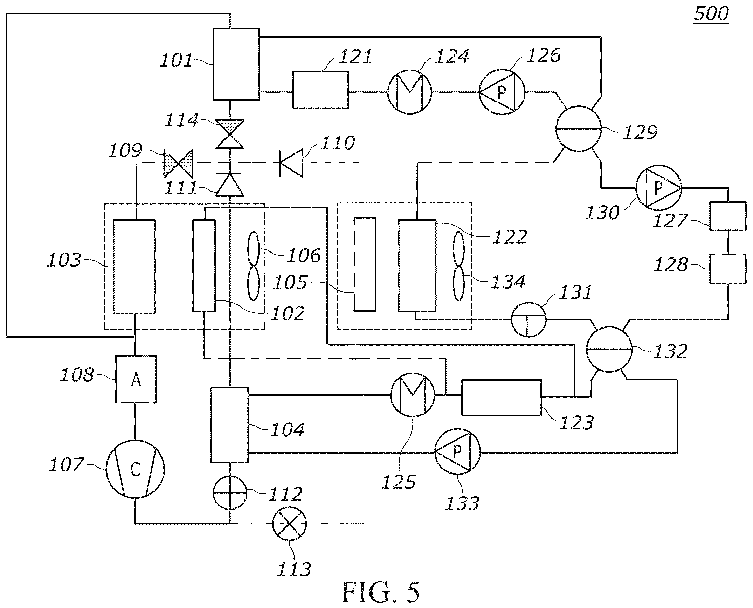

FIG. 5 is a schematic diagram of a thermal management system 500 for a battery electric vehicle providing heating for the cabin and cooling for the batteries according to an exemplary embodiment of the invention. The exemplary embodiment depicted in FIG. 5 provides heating for a cabin of a BEV, as well as cooling for batteries used by the BEV. The cabin can include both the driver and passengers in the BEV. This exemplary embodiment preferably uses batteries as a heat source. This exemplary embodiment is preferably used when the ambient outdoor temperature is between approximately 5 and 10 degrees Celsius depending on the battery cell temperature. In accordance with this exemplary embodiment, cabin heater 123 and in-dash heater core obtain heat pumped from batteries 121.

In this indirect heat pump system, low pressure, low temperature refrigerant vapor is received into compressor 107. Compressor 107 compresses the received refrigerant vapor into high pressure high temperature vapor. The vapor condenses and releases heat in liquid condenser 104 to the coolant, which carries the heat to both cabin heater 123 and in-dash heater core 102. The liquid refrigerant expands through expansion valve 114 and becomes a low temperature, low pressure vapor/liquid mixture, which extracts heat from coolant in chiller 101 and becomes low temperature, low pressure vapor, which is circulated through accumulator 108, and the process continues.

To heat the cabin of the vehicle, valve 132 is closed and separates the cabin heating loop from other cooling loops. Pump 133 preferably circulates the coolant through liquid condenser 104, which carries the heat to cabin heater 123 for cabin heating and to in-dash heater core 102 for driver heating. In this exemplary embodiment, electric heater 125 is turned off.

In this exemplary embodiment, valve 129 is closed to provide cooling to batteries 121 and isolate this loop from power electronics 127 and motor 128. Chiller 101 provides coolant through pump 126 to cool batteries 121. The coolant then returns to chiller 101 and the process continues. In this exemplary embodiment, electric heater 124 is turned off. The waste heat from power electronics 127 and motor 128 is passed via coolant to radiator 122, which dissipates the heat.

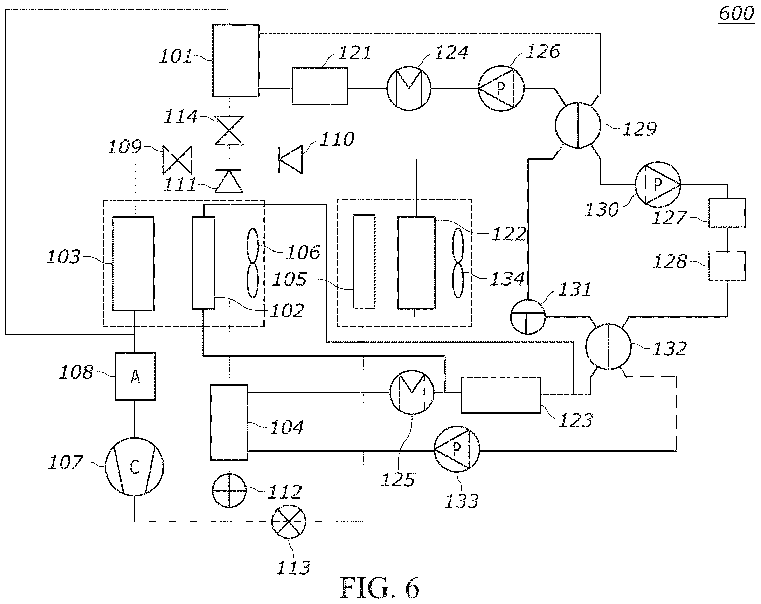

FIG. 6 is a schematic diagram of a thermal management system 600 for a battery electric vehicle using waste heat according to an exemplary embodiment of the invention. The exemplary embodiment depicted in FIG. 6 provides heating for a cabin of a BEV, which can include both the driver and passengers in the BEV. This exemplary embodiment is preferably used when the ambient outdoor temperature is between approximately 5 and 20 degrees Celsius.

In accordance with this exemplary embodiment, cabin heater 123 obtains heat from waste heat, which is heat that is produced by elements within thermal management system 200.

Pump 133 preferably circulates the coolant through cabin heater 123 to heat the cabin. In this exemplary embodiment, electric heater 125 is turned off.

To provide heat to the driver of the vehicle, waste heat from batteries 121, power electronics 127, and motor 128 is sent through open valve 132 to in-dash heater core 102. In this exemplary embodiment, in-dash blower 106 blows air over in-dash heater core 102, which provides heat to the driver of the vehicle. In this exemplary embodiment, electric heater 124 is turned off. The coolant is then recirculated.

In this exemplary embodiment, the coolant from power electronics 127 and motor 128 is hot enough to directly heat the cabin or the driver. Therefore, in this exemplary embodiment the compressor and the heat pump system are not running, saving electric energy.

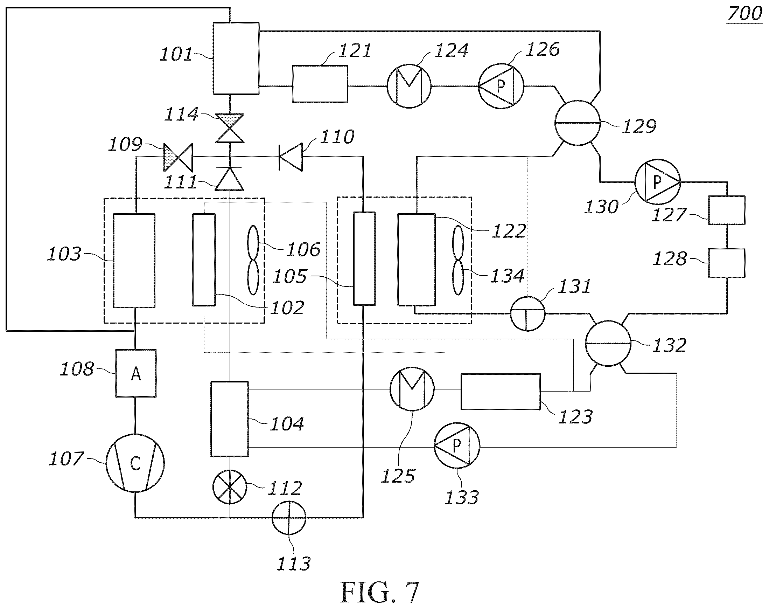

FIG. 7 is a schematic diagram of a thermal management system 700 for a battery electric vehicle providing cooling for a driver and batteries while the air conditioner is running according to an exemplary embodiment of the invention. This is an AC system with compressor 107, condenser 105, parallel expansion valves 109 and 114, and parallel evaporator 103 and chiller 101.

To cool the driver of the vehicle, cold refrigerant is received at in-dash evaporator 103. In-dash blower 106 blows air over in-dash evaporator 103, thereby cooling the driver of the vehicle. The refrigerant is then cycled through the system and the process continues.

To cool batteries 121, chiller 101 cools coolant received by chiller 101. This chilled coolant is passed through pump 126 and passes through batteries 121, thereby providing cooling to batteries 121. The coolant then returns to chiller 101, where the process continues. In this exemplary embodiment, valve 129 is closed, thereby isolating the cooling of batteries 121 from other heating/cooling systems of thermal management system 700. In this exemplary embodiment, electric heater 124 is turned off.

In this exemplary embodiment, waste heat from power electronics 127 and motor 128 is passed to radiator 122, which with the help of radiator fan 134 is dissipated.

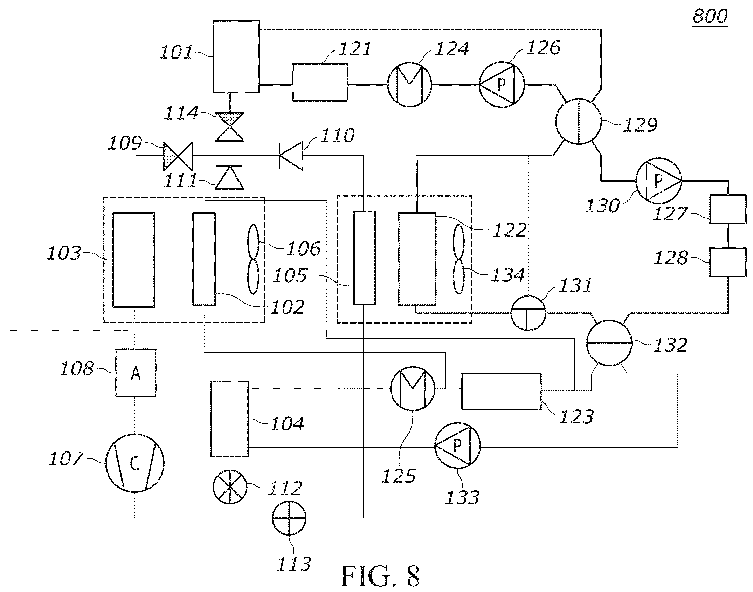

FIG. 8 is a schematic diagram of a thermal management system 800 for a battery electric vehicle providing cooling for a driver using ambient air according to an exemplary embodiment of the invention.

To cool the driver of the vehicle, in-dash blower 106 blows air over in-dash evaporator 103, thereby cooling the driver of the vehicle. This exemplary embodiment operates when the ambient temperature is sufficient to cool the driver, and no AC cooling nor heating is required. Waste heat is dissipated through radiator 122.

With respect to the use of plural and/or singular terms herein, those having skill in the art can translate from the plural to the singular and/or from the singular to the plural as is appropriate to the context and/or application. The various singular/plural permutations may be expressly set forth herein for sake of clarity.

### INDUSTRIAL APPLICABILITY

A cooling system 100 as described herein provides for an improved thermal management system for battery electric vehicles. This is preferably accomplished by utilizing waste heat, a compressor, electric heaters, and a compressor running as a heat pump to provide heating to a cabin of a battery electric vehicle. The heating is preferably provided to a cabin of the BEV and provides heat to the driver and any passengers or occupants of the cabin. The thermal management system also provides heat to batteries in the BEV and a defroster in the BEV.

In exemplary embodiments of the present invention, the air conditioning (AC) system runs as an indirect heat pump, extracting heat from waste heat from the power electronics, power motor and batteries, depending on the ambient and vehicle running conditions. This is an efficient way of heating the cabin and passengers.

Numerous modifications to the present invention will be apparent to those skilled in the art in view of the foregoing description. It is not desired to limit the invention to the exact construction and operation shown and described, and accordingly, all suitable modifications and equivalents may be resorted to, falling within the scope of the invention. Accordingly, this description is to be construed as illustrative only of the principles of the invention and is presented for the purpose of enabling those skilled in the art to make and use the invention and to teach the best mode of carrying out same. The exclusive rights to all modifications which come within the scope of the appended claims are reserved. All patents, patent publications and applications, and other references cited herein are incorporated by reference herein in their entirety.

## Claims

1. A thermal management system for a battery electric vehicle, comprising:
an air conditioner (AC) system for providing cooling to a cabin of the battery electric vehicle;
a chiller for providing cooling to a battery within the battery electric vehicle; and
wherein the AC system provides heating to the cabin by acting as an indirect heat pump.

2. A thermal management system for a battery electric vehicle in accordance with claim 1, wherein the AC system provides heating to the cabin by acting as an indirect heat pump by extracting heat from waste heat, especially by extracting waste heat from power electronics located within the battery electric vehicle.

3. A thermal management system for a battery electric vehicle in accordance with claim 1, wherein the AC system provides heating to the cabin by acting as an indirect heat pump by extracting heat from a power motor located within the battery electric vehicle, and/or by extracting heat from the battery.

4. A thermal management system for a battery electric vehicle (BEV), comprising:
a cabin heater that obtains heat from waste heat generated in the BEV and transfers the heat to a coolant;
an in-dash heater core coupled with the cabin heater via the coolant, wherein the in-dash heater core receives the heat via the coolant; and
an in-dash blower coupled with the in-dash heater core, wherein the in-dash blower blows air over the in-dash heater core to provide heat to a cabin of the BEV.

5. A thermal management system in accordance with claim 4, wherein the coolant provides heat to at least one battery in the BEV, especially when the ambient outdoor temperature is between approximately -10 and 0 degrees Celsius.

6. A thermal management system in accordance with claim 4 or 5, wherein the liquid condenser passes the refrigerant through a chiller and back into a cooling side of the thermal management system, in particular through a four-way coolant valve and a coolant pump to cool the at least one battery.

7. A thermal management system in accordance with claim 6, wherein the chiller passes the refrigerant through an accumulator to a refrigerant compressor.

8. A thermal management system in accordance with claim 7, wherein the refrigerant compressor heats the refrigerant and passes the refrigerant to the liquid condenser.

9. A thermal management system in accordance with claim 7 or 8, wherein the refrigerant compressor acts as a component of a heat pump.

10. A thermal management system in accordance with any one of claims 7 to 9, wherein the refrigerant compressor passes the refrigerant to a liquid condenser.

11. A thermal management system in accordance with any one of claims 4 to 10, the thermal management system further comprising an electric heater.

12. A thermal management system in accordance with any one of claims 4 to 11, wherein the chiller passes the coolant through a coolant pump, and wherein the coolant pump passes the coolant over the at least one battery to cool the at least one battery.

13. A thermal management system in accordance with any one of claims 4 to 12, wherein the chiller passes the refrigerant through an accumulator, in particular to a refrigerant compressor.

14. A thermal management system in accordance with claim 13, wherein the refrigerant compressor heats the refrigerant and passes the refrigerant to the liquid condenser to provide heat to the cabin of the BEV.

15. A thermal management system for a battery electric vehicle (BEV) of any one of claims 1 to 14, comprising:
a battery coolant loop that provides thermal management to batteries within the BEV; a cabin coolant loop that provides thermal management to a cabin within the BEV;
at least one other coolant loop that provides thermal management to other portions within the BEV;
a first four-way valve that provides connection to or separation between the battery coolant loop and the at least one other coolant loop; and
a second four-way valve that provides connection to or separation between the cabin coolant loop and the at least one other coolant loop.
